Europäisches Patentamt

European Patent Office

Office européen des brevets

(19)

(11) Numéro de publication: **0 088 703**
**A2**

# (12) DEMANDE DE BREVET EUROPEEN

(21) Numéro de dépôt: 83400483.0

(22) Date de dépôt: 09.03.83

(51) Int. Cl.³: **F 16 L 47/00**, F 16 L 47/02, F 16 L 41/04

(30) Priorité: **10.03.82 MC 1580**

(43) Date de publication de la demande: **14.09.83**
Bulletin 83/37

(84) Etats contractants désignés: **FR GB**

(71) Demandeur: **INNOVATION TECHNIQUE, "Les Industries" rue du Stade, Monaco (MC)**

(72) Inventeur: **Grandclement, Gérard, 89, Avenue du 3 Septembre, F-06320 Cap d'Ail (FR)**

(74) Mandataire: **Flechner, Willy, CABINET FLECHNER 22, Avenue de Friedland, F-75008 Paris (FR)**

(54) **Procédé et dispositif de raccordement d'un conduit à une canalisation.**

(57) Le dispositif de raccordement d'un conduit à une canalisation en matière thermofusible comprend une selle (1), ayant une semelle de soudage (4) en matière thermofusible à ouverture (10) entourée d'un dispositif de chauffage (9) de la semelle (4) et un fût (3) menant de l'ouverture (10) au conduit (5), et des moyens pour appliquer la selle (1) sur la canalisation. Les moyens (13, 14) sont des sangles amovibles.

ACTORUM AG

1

Procédé et dispositif de raccordement d'un conduit à une canalisation.

La présente invention concerne les prises de dérivation fixées sur les canalisations de distribution de fluides, tels que gaz, eau, produits chimiques liquides ou gazeux, quand ces canalisations sont réalisées en matériau thermoplastique et, le plus souvent, en polyéthylène.

De telles prises de dérivation sont utilisées sur ces canalisations pour y poser une dérivation, l'opération pouvant être effectuée sur la canalisation en charge. Elles sont généralement réalisées dans le même matériau plastique que la canalisation; elles comportent un collier venant se placer autour de la canalisation principale, un fût issu de ce collier comportant le tube de sortie et sur lequel viendra prendre place la canalisation secondaire, ce fût comportant en outre les moyens nécessaires au perçage de la conduite principale, pour la mise en charge de la conduite secondaire. L'étanchéité entre la canalisation principale et le fût, est obtenue par le soudage d'une partie du collier de la prise de dérivation sur la canalisation principale, ce soudage étant obtenu par une résistance chauffante disposée sur la surface intérieure du collier et coaxiale avec le fût de la dérivation, cette résistance chauffante étant parcourue par un courant électrique au moment du soudage, pour chauffer les surfaces de la canalisation principale et du collier en regard, et les amener à la température de fusion et de soudage.

Les prises de dérivation actuelles ont toujours un collier dont le diamètre intérieur est égal au diamètre extérieur de la canalisation pour laquelle ils sont prévus, le collier faisant le tour complet de la canalisation. Pour son montage, ce collier est constitué généralement de deux demi-colliers à peu près semi-cylindriques restant définitivement sur la canalisation après mise en oeuvre.

Bien que donnant de bons résultats, ce système devient très onéreux dans son application réelle quand il s'agit de prises où les dérivations sont de faible diamètre par rapport à la canalisation principale ; en effet :

- Les prises doivent faire le tour complet de la canalisation principale, réclamant un volume de matière important par rapport à celui qui est demandé par la dérivation elle-même, et donc un prix de revient et un poids élevés.

- Par ailleurs, il est nécessaire d'avoir un modèle de prise pour chaque diamètre de canalisation principale, réduisant les possibilités de fabrication en grandes séries, augmentant considérablement les coûts d'investissements par l'augmentation du nombre de moules d'injection plastiques, augmentant le stock de pièces différentes chez l'utilisateur.

L'invention vise un procédé et un dispositif tels que définis aux revendications.

La présente invention décrit une prise de dérivation dans laquelle le collier est supprimé ; la prise est soudée à la canalisation principale par une semelle de soudage proportionnée à la dérivation à mettre en oeuvre et non plus à la canalisation principale. Cette semelle de soudage est serrée sur la canalisation principale pour le soudage, par un collier de serrage adapté à la prise de dérivation, mais amovible, et réutilisable autant de fois qu'on le veut. En outre, la semelle de soudage plus courte est assez souple pour pouvoir s'adapter à des canalisations de diamètres différents ; de cette manière, on a remplacé plusieurs modèles de prises de dérivation par un modèle unique, facilitant la possibilité de fabriquer en grande série, tout en réduisant les investissements spécifiques, facilitant également le contrôle et la réduction des stocks de l'utilisateur.

L'invention sera mieux comprise dans la description ci-après, donnée à titre d'exemple, et dont la compréhension est facilitée par les dessins annexés, où :

la figure 1 représente un dispositif suivant l'invention, placé sur une canalisation, coupé suivant le plan perpendiculaire à l'axe de la canalisation ;

la figure 2 est le même dispositif en vue de dessus ;

la figure 3 est un dispositif comme en figure 1, mais comportant un collier de serrage suivant une autre version ;

la figure 4 est le dispositif de la figure 3, vu de dessus ;

la figure 5 est la vue de face d'une selle maintenue par un appareil de serrage sur la canalisation ;

la figure 6 est la vue de côté des mêmes pièces avec une coupe partielle ; et

les figures 7 et 8 illustrent une autre variante.

Dans toutes ces figures, on a représenté aussi, schématiquement, les colliers de serrage amovibles utilisés pour la mise en oeuvre des prises de branchement, suivant l'invention.

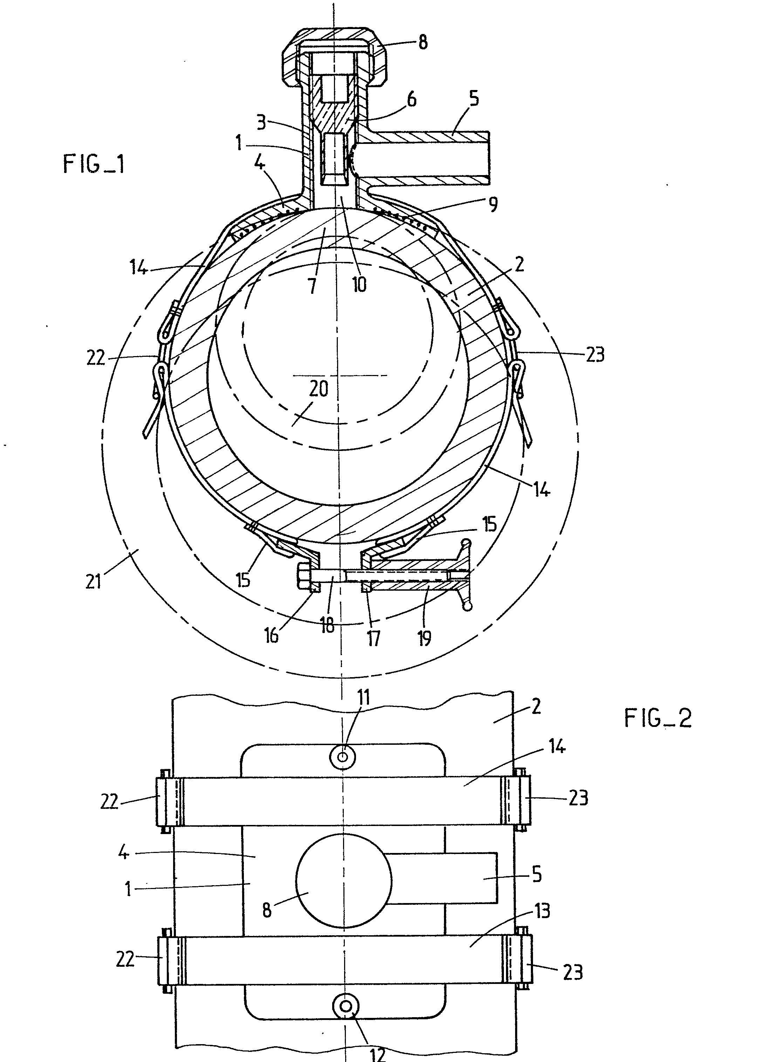

La selle 1, représentée en figures 1 et 2, avec son collier de serrage, est prête à être soudée sur la canalisation principale 2. Elle est constituée d'un fût 3, d'une semelle de soudage 4, d'un tube de sortie 5 destiné à recevoir la canalisation dérivée, d'un perforateur 6 qui se visse dans le fût 3 et peut, par vissage, découper une carotte circulaire dans la partie 7 de la canalisation principale 2, afin de mettre en charge la dérivation. Un bouchon 8 se visse sur le sommet du fût 3 pour refermer la prise après sa mise en oeuvre.

La canalisation 2 est en matériau plastique, généralement en polyéthylène, matériau souple, déformable, et en même temps résistant bien aux chocs, à la corrosion, à la pression. L'épaisseur de la canalisation est importante, de l'ordre du dixième de son diamètre, pour résister à la pression intérieure.

La selle 1 est réalisée dans le même matériau, afin que la soudure de la semelle de soudage 4 sur la canalisation soit homogène et solide. Cette soudure est obtenue grâce à une résistance électrique 9 enroulée en spirale dans la semelle de soudage 4 de la prise, autour de son trou central 10. La résistance est placée très près de la face intérieure de la semelle de soudage. Les extrémités de cette résistance débordent en 11 et 12, afin de pouvoir être connectées à une source de tension électrique. Quand la semelle de soudage est appliquée sur toute sa surface intérieure contre la surface extérieure de la canalisation 2, et que l'on fait passer le courant électrique dans la résistance 9, la résistance puis le polyéthylène placé autour d'elle s'échauffent et se dilatent. On obtient, ainsi, un volume de matière en fusion autour de la résistance, ce volume étant constitué en partie par la partie interne de la semelle de soudage, en partie par la partie externe de la canalisation placée en regard. Ce volume est sous pression, grâce à la dilatation volumique, assurant l'interpénétration de matières des deux pièces, et formant ainsi une soudure. Après arrêt du courant électrique et refroidissement, la semelle de soudage est soudée sur la canalisation, sur toute la surface de la résistance électrique.

Pour assurer la solidité mécanique de l'assemblage ainsi réalisé, la surface de soudage doit être proportionnelle aux dimensions du fût 3 de la prise, et du conduit 5, qui sont directement liées, puisque le fût doit assurer un passage à peu près identique à celui du conduit 5. On conçoit facilement que, quand la dérivation fixée au conduit ou tube de sortie 5 est de diamètre beaucoup plus petit que celui de la canalisation principale 2, une surface de soudage n'occupant qu'une faible partie de celle de la canalisation principale 2 est suffisante, comme cela est représenté en figures 1 et 2.

De plus, l'épaisseur de la semelle de soudage est proportionnée à celle des autres parties de la dérivation qui, étant de diamètres beaucoupe plus faibles que celui de la canalisation 2, sont d'épaisseur beaucoup plus faible pour une même résistance à la pression interne.

L'épaisseur de la semelle de soudage est donc beaucoup plus faible que celle de la canalisation principale 2.

Il s'ensuit, comme ceci est visible sur la figure 1, en particulier, que l'épaisseur de la semelle de soudage est très faible par rapport à son rayon de courbure, qui est aussi le rayon de la canalisation principale 2.

La prise de dérivation 1 est moulée par le procédé d'injection, dans la même matière plastique que la canalisation 2 qui est, dans l'exemple choisi, du polyéthylène. La semelle de soudage a la forme d'une portion de cylindre, dont le rayon de courbure est identique à celui de la canalisation principale 2.

Pour le soudage de la selle 1 sur la canalisation 2, il est nécessaire que la surface interne de sa semelle de soudage 4 soit maintenue au contact de la surface en regard de la canalisation 2. A cet effet, on utilise un collier de serrage amovible, et plaquant la semelle de soudage sur la canalisation en faisant le tour de celle-ci. On a représenté un tel collier de serrage sur les figures 1 et 2. Il est constitué de deux sangles souples 13 et 14, passant sur la semelle de soudage 4 de part et d'autre du fût central 3, et dont les extrémités 15 sont fixées sur deux pièces rigides 16 et 17 qui se rejoignent sous la canalisation, et qui comportent un moyen de serrage constitué d'une vis 18 fixée à la pièce 16, et d'un écrou 19 vissable manuellement sur la vis 18, et entraînant la pièce rigide 17 pour obtenir le serrage des sangles 13 et 14 en rapprochant les pièces 16 et 17.

Ayant ainsi sa semelle de soudage 4 maintenue contre la canalisation, la prise de branchement peut être soudée sur cette dernière. Après soudage et refroidissement, le collier de serrage amovible peut être enlevé en dévissant l'écrou 19.

La semelle de soudage 4 a une épaisseur faible par rapport à son rayon de courbure. De plus, le polyéthylène utilisé est un matériau assez souple pour accepter de légères déformations permanentes sans perte de sa résistance mécanique.

On peut donc utiliser la prise de dérivation 1 représentée, pour son soudage sur des canalisations dont le rayon est différent du rayon de courbure initial de sa semelle de soudage. On a représenté en figure 1, en traits mixtes, une canalisation 20 dont le rayon est 0,66 fois celui de la canalisation 2, et une canalisation 21 dont le rayon est 1,5 fois celui de la canalisation 2. A condition d'avoir un collier de serrage de la semelle bien adapté, la semelle de soudage 4 peut être suffisamment déformée pour que, quand elle est serrée sur la canalisation 20, par exemple, sa surface intérieure vienne se plaquer sur la surface extérieure de cette canalisation. Il en est de même pour une canalisation plus grande, comme la canalisation 21.

Afin d'être adaptée à ces différentes canalisations, chacune des sangles 13 et 14 du collier de serrage comporte un dispositif de réglage de longueur. Ces dispositifs sont visibles sur les figures 1 et 2, en 22 et 23.

Il faut noter que la déformation forcée de la semelle de soudage 4, sur les canalisations 20 ou 21, induit des contraintes internes dans cette semelle de soudage ; mais ces contraintes disparaissent en plus grande partie au cours de l'échauffement de la matière pendant le soudage ; de toutes façons, la matière utilisée peut très bien accepter de telles contraintes, puisque, par exemple, les canalisations réalisées dans cette matière ont la propriété de pouvoir être enroulées sur tourets pour leur stockage, puis déroulées et redressées pour leur pose.

8

Il est clair que le collier de serrage de la prise de dérivation sur la canalisation peut être différent du collier décrit ci-dessus sans, pour autant, sortir de l'objet de l'invention.

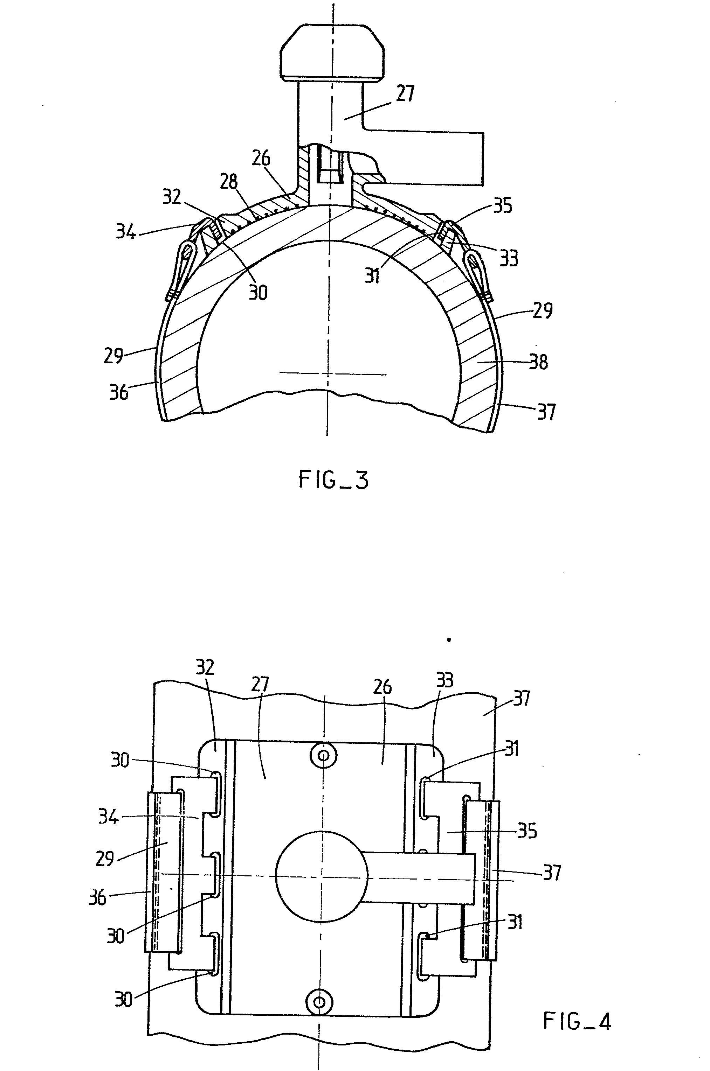

Ainsi, on a représenté, sur les figures 3 et 4, une variante de ce collier de serrage.

La semelle de soudage 26 de la prise de dérivation 27, dans laquelle est inclus le fil résistant 28, est fixée sur la canalisation 38 par un collier 29 qui, au lieu de passer par-dessus la semelle de soudage comme à la figure 1, s'accroche dans des logements prévus à cet effet sur la semelle de soudage. Les logements 30 et 31 sont obtenus par moulage sur les bords renforcés 32 et 33 de la semelle de soudage 26.

Des pièces rigides 34 et 35, en forme de crochets, prennent place dans les logements 30 et 31. Ces pièces 34 et 35, constituant les extrémités du collier de serrage sont reliées ensemble par des sangles 36 et 37, souples ou rigides, qui se rejoignent sous la canalisation 38 par l'intermédiaire d'un dispositif de serrage qui peut être identique à celui déjà représenté en figures 1 et 2, et non représenté ici.

Ce mode de réalisation présente, lui aussi, l'avantage de bien plaquer la semelle de soudage sur la canalisation, même si celle-ci est de rayon extérieur différent du rayon de courbure intérieur initial de la semelle de soudage. On peut donc aussi utiliser la même prise de dérivation pour plusieurs canalisations de diamètres différents.

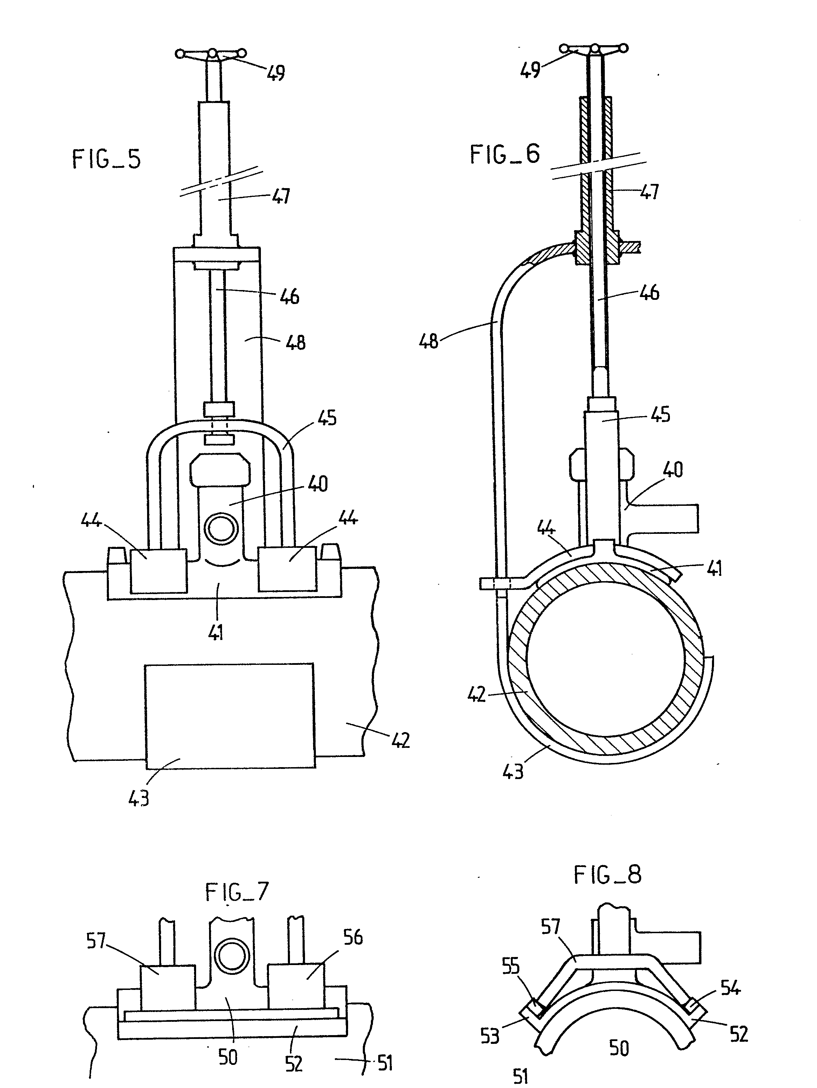

Sur les figures 5 et 6, la selle 40 avec sa semelle de soudage 41 est posée sur la canalisation 42. La selle est serrée sur la canalisation par le bras inférieur 43 et les deux bras supérieurs 44 de l'appareil de soudage ; alors que le bras inférieur a la forme d'une portion de cylindre prenant appui sur la partie inférieure de la canalisation, les deux bras supérieurs ont des formes de portions de cylindre prenant appui sur la semelle 41 de part et d'autre du fût 40.

Un système de vis-écrou permet d'obtenir le serrage des bras de l'appareil de serrage sur l'ensemble de la selle et de la canalisation.

Le bras inférieur 43 est relié à un écrou 47 par l'intermédiaire d'un montant rigide 48, alors que les bras supérieurs 44 sont reliés à une tige filetée 46 par l'intermédiaire d'un arceau 45 rigide et fixé aux bras 44 ; la liaison entre l'arceau 45 et la tige filetée 46 est telle que ces pièces sont solidaires en translation, mais permet la rotation de la tige 46 par rapport à l'arceau 45.

La tige 46 est vissée dans l'écrou 47 solidaire du bras inférieur 43, de telle sorte que la rotation de la poignée 49 dans le sens du vissage donne un serrage de la selle 40 sur la canalisation 42 ; une pression de serrage déterminée de la selle sur la canalisation peut être obtenue en vissant la poignée 49 avec une clé dynamométrique.

Cet appareil de serrage permet la mise en oeuvre d'une dérivation sur une canalisation 42 enterrée, sans effectuer une fouille importante autour de la canalisation afin d'y permettre l'accès d'un homme ; en effet, il suffit de faire une tranchée depuis la surface du sol jusqu'à la canalisation 42, cette tranchée ayant une largeur à peine supérieure à celle de la selle 40. L'écrou 47, la tige 46, de l'appareil de serrage ayant une longueur suffisante, de l'ordre de 1 à 2 mètres par exemple, la mise en oeuvre de la selle sur la canalisation 42 pourra se faire de la manière suivante :

L'arceau 45 de l'appareil étant remonté jusqu'à la base de l'écrou 47, la selle pourra être mise en place sur les bras supérieurs 44 par l'intermédiaire de n'importe quel moyen, par exemple un adhésif dont le seul but est de maintenir la selle sur les bras supérieurs pendant la manutention ; l'ensemble est ensuite descendu dans la tranchée et le bras inférieur 43 est engagé sous la canalisation 42 ; le vissage de la poignée 49 fait descendre l'ensemble mobile des pièces 46, 45 et 44 jusqu'au contact de la selle avec la canalisation.

L'ensemble a alors la position représentée sur les figures 5 et 6.

On n'a pas représenté les conducteurs électriques destinés à alimenter la résistance chauffante de la semelle pour son soudage sur la canalisation ; ces conducteurs peuvent être descendus en même temps que l'appareil de soudage.

Une fois la selle soudée sur la canalisation, l'appareil de montage peut être démonté en ramenant vers le haut l'arceau 45 par dévissage de la poignée, puis en dégageant le bras inférieur 43.

Aux figures 7 et 8, une variante de bras supérieurs de serrage est représentée, permettant une mise en contact de la selle 50 sur la canalisation 51 sur toute leur surface en regard ; à cet effet, on a représenté sur la selle 50 deux rebords ou retenues 52 et 53 latéraux moulés avec la selle sur toute sa largeur ; la selle étant en matière plastique relativement souple, deux barres métalliques 54 et 55 répartissant l'effort des bras supérieurs 56 et 57 sur toute la longueur des saillies 52 et 53 de la selle ; ceci assure un plaquage parfait de la selle sur la canalisation sur toute leur surface en contact,

11

afin d'obtenir par la suite une bonne soudure des
deux pièces.

0088703

1

<u>REVENDICATIONS</u>

1. Procédé de raccordement d'un conduit à
une canalisation qui consiste à placer sur la canalisation une selle ayant une semelle de soudage apte
à se souder à la canalisation et ayant un fût de raccordement au conduit, à maintenir la selle sur la
canalisation à l'aide d'un moyen de serrage dont les
extrémités sont fixées aux extrémités de la selle,
à fixer par soudage la selle sur la canalisation et
à percer la canalisation dans la zone recouverte par
la semelle en regard du fût, caractérisé en ce qu'il
consiste à enlever le moyen de serrage après le soudage ou après le perçage.

2. Dispositif de raccordement d'un conduit à
une canalisation en matière thermofusible, comprenant une selle (1), ayant une semelle de soudage (4)
en matière thermofusible à ouverture (10) entourée
d'un dispositif de chauffage (9) de la semelle (4)
et un fût (3) menant de l'ouverture (10) au conduit
(5), et des moyens pour appliquer la selle (1) sur
la canalisation, caractérisé en ce que ces moyens
(13, 14) sont montés de manière amovible après que
la selle (1) a été soudée.

3. Dispositif suivant la revendication 2,
caractérisé en ce que la selle ne recouvre la canalisation que sur une partie inférieure au rayon de celle-ci.

4. Dispositif suivant la revendication 2 ou 3, caractérisé en ce que la semelle de soudage est assez souple pour pouvoir s'adapter à différents rayons de canalisation.

5. Dispositif suivant l'une des revendications 2 à 4, caractérisé en ce que le moyen de serrage est constitué de deux ou de plusieurs sangles souples (13 et 14) faisant le tour de la canalisation en passant par-dessus la semelle de soudage (4), et comportant un système de serrage (18, 19) de ces sangles souples.

6. Dispositif suivant l'une des revendications 2 à 5, caractérisé en ce que les sangles (13, 14) souples comportent un moyen de réglage en longueur (22, 23), pour pouvoir s'adapter à différents diamètres de canalisations.

7. Dispositif suivant l'une des revendications 2 à 6, caractérisé en ce que la semelle de soudage (26) comporte des évidements (30, 31) ou bourrelets, dans lesquels prennent place des crochets (34, 35) rigides, liés à des sangles souples passant sous la canalisation et comportant un système de serrage, afin d'obtenir le serrage de la selle sur la canalisation.

8. Dispositif suivant la revendication 2, caractérisé en ce que le dispositif de serrage comprend des bras de serrage (43, 44) inférieur et supérieur reliés entre eux par un système à vis et écrou (46, 47).

9. Dispositif suivant la revendication 8, caractérisé en ce que la selle (50) comporte deux rebords latéraux (52, 53) attaqués par deux bras supérieurs (56, 57) de serrage.

FIG_1

FIG_2

FIG_3

FIG_4

0088703

FIG_5

49

47

46

48

45

40

44          44

41

42

43

FIG_6

49

47

46

48

45

40

44

41

42

43

FIG_7

57          56

50    52    51

FIG_8

57

55

53

51    50    52

54